# EUROPEAN PATENT SPECIFICATION

(11) **EP 4 221 018 B1**
(45) Date of publication and mention of the grant of the patent: **05.08.2026**
(21) Application number: 22783906.5
(22) Date of filing: 28.03.2022
(51) Int. Cl.: H04B 7/185, H04W 36/08, H04W 36/14, H04W 84/06

(54) **COMMUNICATION METHOD BASED ON HANDOVER OF TERRESTRIAL MOBILE NETWORK AND SATELLITE MOBILE NETWORK AND CORE NETWORK**
KOMMUNIKATIONSVERFAHREN AUF DER BASIS DER ÜBERGABE EINES TERRESTRISCHEN MOBILFUNKNETZES SOWIE MOBILES SATELLITENNETZ UND KERNNETZ
PROCÉDÉ DE COMMUNICATION BASÉ SUR UN TRANSFERT INTERCELLULAIRE DE RÉSEAU MOBILE TERRESTRE ET DE RÉSEAU MOBILE SATELLITE, ET RÉSEAU CENTRAL

(30) Priority: 07.04.2021 CN 202110371376
(43) Date of publication of application: 02.08.2023
(73) Proprietor: IPlook Networks Co., Ltd., Guangzhou, Guangdong 510700 (CN)
(72) Inventor: QIU, Quanguan, Guangzhou, Guangdong 510700 (CN); SU, Guozhang, Guangzhou, Guangdong 510700 (CN)
(74) Representative: Meyer, Thorsten
(86) International application number: PCT/CN2022/083499
(87) International publication number: WO 2022/213839

(56) References cited:
- WO-A2-2017/123292
- CN-A- 103 634 041
- CN-A- 110 429 975
- CN-A- 111 711 973
- CN-A- 113 115 394
- US-A- 6 157 834
- US-A1- 2015 271 730
- US-A1- 2019 199 427

## Description

### TECHNICAL FIELD

This application relates to the technical field of mobile communication, and in particular to a communication method based on handover of a terrestrial mobile network and a satellite mobile network, and a core network.

### BACKGROUND

With the development of mobile communication technology, it is no longer satisfied with using the signals of ground base stations for mobile equipment communications. Mobile communication technology has begun to enter the satellite mobile communication network which has the advantage of wide coverage compared with the public land mobile network based on ground base stations. When the number of satellites is enough, the satellite signals may be still received even in the mountains or deserts, and the satellite mobile network for communication may be still available even in the case of natural disasters in a certain area, such as earthquakes resulting in the destruction of local base stations and power outages. Nevertheless, compared with the public land mobile network, the satellite mobile network has the disadvantages of limited number of satellites, long distance, high time delay and small bandwidth in the air and ground communication. US2019/199427A1 discusses a method for carrying Voice over **LTE** network including providing a dedicated channel between a user terminal and a gateway and associating the dedicated channel of a voice communication with a header context. US6157834A discusses interoperability between terrestrial cellular systems and satellite based cellular systems. WO2017123292A2 discusses a method for managing inter-satellite handovers to allow a user terminal to reduce the frequency of handovers while maintaining a sufficiently high system capacity in a non-geosynchronous satellite communication system. CN111711973A discusses a method for switching from a ground mobile communication network to a satellite mobile communication network to determine a target satellite to be switched.

Some communication technologies adopt the handover between the terrestrial mobile network and the satellite mobile network, which can make comprehensive use of the advantages of the terrestrial mobile network and the satellite mobile network. However, such a handover is to directly disconnect the original network and then access the new network, which easily leads to problems such as communication interruption, seriously affects the continuous data in the communication process, and even makes the communication unavailable.

### SUMMARY OF THE INVENTION

In view of at least one of the above technical problems, the purpose of this application is to provide a communication method and a core network based on handover of a terrestrial mobile network and a satellite mobile network.

As one aspect, the embodiment of this application includes a communication method based on handover of a terrestrial mobile network and a satellite mobile network, including:
obtaining, by a core network, a first handover request sent by a mobile terminal via a ground base station connected with the mobile terminal, wherein the first handover request includes a first context data generated between the mobile terminal and the ground base station;
in response to the first handover request, searching out and selecting, by the core network, a target satellite among satellite identifiers included in the first handover request which is a communication satellite capable of maintaining a longest effective communication time with the mobile terminal;
caching, by the core network, the first context data;
requesting, by the core network, the target satellite to switch a connection of the mobile terminal from the ground base station to the target satellite; and
when a handover result returned from the target satellite is successful, modifying, by the core network, a data link of the mobile terminal to be connected with the target satellite, and sending the first context data to the mobile terminal via the target satellite.

Further, the communication method based on handover of a terrestrial mobile network and a satellite mobile network further includes:
when the handover result returned from the target satellite is successful, returning, by the core network, the handover result to the ground base station and instructing the ground base station to release the first context data.

Further, the communication method based on handover of a terrestrial mobile network and a satellite mobile network further includes:
when the handover result returned from the target satellite is failed, returning, by the core network, the handover result to the ground base station, keeping the data link of the mobile terminal to be connected with the ground base station, cancelling a cache of the first context data, and sending the first context data to the mobile terminal via the ground base station.

Further, the first handover request further includes a satellite identifier of at least one communication satellite detected by the mobile terminal.

Further, in response to the first handover request, searching out, by the core network, a target satellite, includes:
reading, by the core network, a running trajectory and a running speed of a corresponding communication satellite locally according to the satellite identifier;
determining an effective communication trajectory of the corresponding communication satellite according to the running trajectory and location information of the mobile terminal;
determining an effective communication time of the corresponding communication satellite according to the effective communication trajectory and the running speed; and
determining a communication satellite with a longest effective communication time as the target satellite.

Further, the communication method based on handover of a terrestrial mobile network and a satellite mobile network further includes:
obtaining, by the core network, a second handover request sent by the mobile terminal via the target satellite, wherein the second handover request includes second context data generated between the mobile terminal and the target satellite;
in response to the second handover request, searching out, by the core network, the ground base station;
caching, by the core network, the second context data;
requesting, by the core network, the ground base station to switch the mobile terminal to be connected to the ground base station; and
when a handover result returned from the ground base station is successful, modifying, by the core network, the data link of the mobile terminal to be connected with the ground base station, and sending the second context data to the mobile terminal via the ground base station.

Further, the communication method based on handover of a terrestrial mobile network and a satellite mobile network further includes:
when the handover result returned from the ground base station is failed, compulsorily switching, by the core network, the connection of the mobile terminal to the ground base station.

Further, compulsorily switching, by the core network, the mobile terminal to connect to the ground base station, includes:
obtaining, by the core network, a registration request message sent by the mobile terminal through the ground base station; and
in response to the registration request message, executing, by the core network, a terminal registration process in TS 3GPP 23502 protocol, accepting a registration of the mobile terminal, and releasing the second context data.

As another aspect, the embodiment of this application further includes a core network, including an access management network element and a data plane network element, wherein the core network is configured to execute the communication method based on handover of terrestrial mobile network and satellite mobile network according to an embodiment.

Further, the access management network element includes an MME network element or an AMF network element, and the data plane network element includes an SGW network element, a PGW network element or a UPF network element.

The beneficial effects of this application follow. In the communication method and the core network based on handover of terrestrial mobile network and satellite mobile network according to the present embodiments, in the whole communication process of the mobile terminal handover from the ground base station to the target satellite, the context data are forwarded by the core network, no direct communication is established between the base station of the terrestrial mobile network and the satellite base station, which avoids the increased resource consumption for establishing the communication between the ground base station and the satellite. For example, the consumption includes the increased satellite communication antennas and resources for the ground base station, and the increased energy consumption for the base station. By these tokens, the cost of the base station is reduced. Since the first handover request carries the first context data generated in the original communication process between the mobile terminal and the ground base station, and the first context data is cached in the core network, in such a way, the preparation for the handover and the multiple data communication with the target satellite in the execution stage are reduced, thus the communication pressure of the target satellite is reduced, meanwhile the continuity of the first context data is maintained, which is suitable the communication process with continuous data requirement.

### BRIEF DESCRIPTION OF THE DRAWINGS

FIG. 1 is a schematic diagram of a communication network system for a communication method based on handover of a terrestrial mobile network and a satellite mobile network according to an embodiment.
FIG. 2 is a flowchart for data processing flow when the mobile terminal hands over from the ground base station to the communication satellite according to an embodiment.
FIG. 3 is a schematic diagram of calculating the effective communication trajectory according to an embodiment.
FIG. 4 is a flowchart for data processing when the mobile terminal hands over from the communication satellite to the ground base station according to an embodiment.
FIG. 5 shows a compulsory handover process for the mobile terminal to connect to the ground base station according to an embodiment.

### DETAILED DESCRIPTION OF ILLUSTRATED EMBODIMENTS

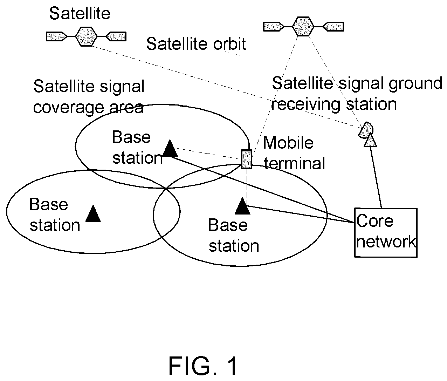

In the present embodiment, a communication method based on handover of a terrestrial mobile network and a satellite mobile network is applied to a communication network system as shown in FIG. 1. Referring to FIG. 1, the communication network system includes a terrestrial mobile network, a satellite mobile network, a core network and a mobile terminal. For figure simplicity, in FIG. 1, only each base station of the terrestrial mobile network is shown, and other components of the terrestrial mobile network, such as servers and optical fiber networks, are not shown. Similarly, FIG. 1 just shows low-earth-orbit satellites, medium-earth-orbit satellites, synchronous satellites and other satellites of the satellite mobile network, as well as satellite signal receiving stations and ground base stations that are independent or integrated. Other components of the satellite mobile network are not shown. The core network includes an access management network element and a data plane network element. When the core network is a 4G core network, the access management network element may be an MME network element, and the data plane network element may be an SGW network element or a PGW network element. When the core network is a 5G core network, the access management network element may be an AMF network element, and the data plane network element may be a UPF network element. Be noted that, the communication method in this embodiment does not depend on the type of the core network, thus a 4G core network, a 5G core network, or other more advanced core networks may be applied.

The principle of the communication method in this embodiment follows. A mobile terminal such as a mobile phone or a tablet computer is held by the user, and the mobile terminal may selectively access the terrestrial mobile network or the satellite mobile network. The algorithm logic for the mobile terminal to selectively access the terrestrial mobile network or the satellite mobile network follows. The terrestrial mobile network is preferentially accessed when base station signals of the terrestrial mobile network are well received; and the satellite mobile network is accessed when no signal or poor signal of the terrestrial mobile network is detected. In the case of the mobile terminal is connected to the satellite mobile network, while good signal quality of the terrestrial mobile network is detected and maintained for a period of time (for example, at least 10 seconds), the mobile terminal may access the terrestrial mobile network, which leads to a reduced cost, furthermore, the terrestrial mobile network has stronger performance, higher stability and stronger user carrying capacity.

Therefore, one of the terrestrial mobile network and the satellite mobile network serves as the current service network and provides a communication link service to the mobile terminal for accessing a communication network, while the other network does not serve as the current service network and is in idle state. For example, when the terrestrial mobile network is accessed by the mobile terminal to be the current service network; the other network, namely the satellite mobile network, is not the current service network. When the satellite mobile network is accessed by the mobile terminal to be the current service network, the other network, namely the terrestrial mobile network, is not the current service network.

Wireless signal quality measurement is carried out regularly on the mobile terminal. In the case of that the mobile terminal is connected to the ground base station, all the ground base station signals of the terrestrial mobile network measured by the mobile terminal cannot guarantee the network data transmission, but several wireless signals of the communication satellite detected can support the data transmission, the mobile terminal will send a request message to the ground base station of the public land mobile network to switch the connection to the satellite mobile network. In the case of that the mobile terminal is connected to the communication satellite, all the communication satellite signals measured by the mobile terminal cannot guarantee the network data transmission, but several wireless signals of the ground base station detected can support the data transmission, the mobile terminal will send a request message to the communication satellite to switch the connection to the terrestrial mobile network.

In this embodiment, the mobile terminal may generate a handover request, when there is a need to switch the current service network based on the algorithm logic of the mobile terminal.

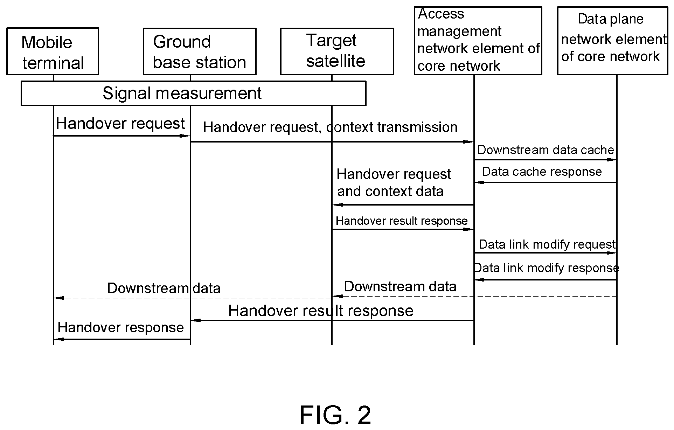

Referring to FIG. 2, the mobile terminal is currently connected to the ground base station. Based on the signal measurement, the mobile terminal determines to switch to connect with the communication satellite, thus a first handover request is generated in the mobile terminal. Further, the mobile terminal packages the first handover request together with first context data generated by the communication between the mobile terminal and the ground base station, and satellite identifiers of several communication satellites with the best signal quality identified by signal quality detection, that is, the first handover request may include the first context data and the satellite identifiers of several communication satellites with the best signal quality.

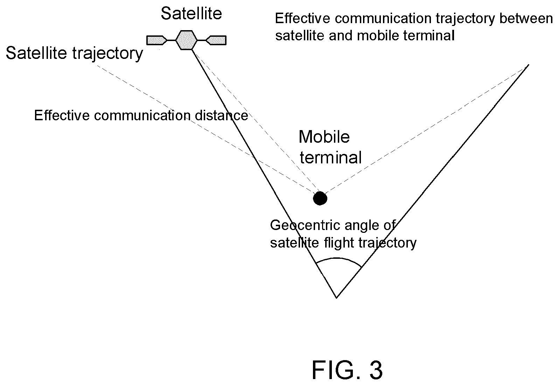

The mobile terminal sends the first handover request to the ground base station, and then the ground base station forwards the first handover request to the access management network element in the core network. After receiving the first handover request, the access management network element analyzes the satellite identifier and then reads a running trajectory and a running speed of the corresponding communication satellite from the local according to the satellite identifier. For example, the running trajectory 1 and the running speed 1 of the corresponding communication satellite 1 are read according to the satellite identifier 1, and the running trajectory 2 and the running speed 2 of the corresponding communication satellite 2 are read according to the satellite identifier 2. Referring to FIG. 3, the access management network element determines the effective communication trajectory of the corresponding communication satellite according to the running trajectory and the location information of the mobile terminal. Specifically, the access management network element may calculate an angle corresponding to the effective communication trajectory between the satellite and the mobile terminal through the effective communication distance between the mobile terminal and the satellite (namely the distance of maintaining an effective communication between the satellite and the mobile terminal) and the location of the satellite. Then, based on the geocentric angle of the satellite flight trajectory corresponding to the effective communication trajectory between the satellite and the mobile terminal, and the angular velocity of the satellite in orbit, the effective communication time of the satellite under the effective trajectory angle is calculated. Finally, by the access management network element, the communication satellite with the longest effective communication time is determined as the target satellite, and the target satellite searched out is the communication satellite that can maintain the longest effective communication time with the mobile terminal.

The access management network element sends the first context data analyzed from the first handover request to the data plane network element which caches the first context data.

The access management network element requests the target satellite to switch the mobile terminal to be connected to the target satellite. Specifically, the access management network element sends the first handover request to the target satellite. After receiving the first handover request, the target satellite returns a response message of a handover result to the access management network element, which is used to indicate whether the handover result returned from the target satellite is successful or failed.

When the handover result returned from the target satellite is successful, the data plane network element in the core network modifies a data link of the mobile terminal to be connected with the target satellite, and sends the cached first context data to the mobile terminal through the target satellite. The access management network element also returns the handover result to the ground base station and instructs the ground base station to release the first context data.

When the handover result returned from the target satellite is failed, the access management network element in the core network returns the handover result to the ground base station, keeps the data link of the mobile terminal to be connected with the ground base station, cancels the cache of the first context data, and sends the cached first context data to the mobile terminal through the ground base station.

In the whole communication process of the mobile terminal handover from the ground base station to the target satellite, a series of optimization has been made compared with the switching process of 3GPP. In this communication process of the present application, the context data are forwarded by the core network, no direct communication is established between the base station of the terrestrial mobile network and the satellite base station, which avoids the increased resource consumption for establishing the communication between the ground base station and the satellite. For example, the consumption includes the increased satellite communication antennas and resources for the ground base station, and the increased energy consumption for the base station. By these tokens, the cost of the base station is reduced. Since the first handover request carries the first context data generated in the original communication process between the mobile terminal and the ground base station, and the first context data is cached in the core network, in such a way, the preparation for the handover and the multiple data communication with the target satellite in the execution stage are reduced, thus the communication pressure of the target satellite is reduced, and the continuity of the first context data is maintained.

When the target satellite is served as the current service base station for the mobile terminal, in the case of that good signal quality for a ground base station of a public land mobile network with is detected and maintained for a period of time (for example, over 10 seconds), a handover process switching from the target satellite to the ground base station may be started. Such a handover is necessary due to a weaker performance of the satellite resulted by a long air distance from the mobile terminal, and the limited satellites on the transmission link of the satellite mobile network. For one satellite, the signal has a wide coverage, thus the performance and the capacity of user carrying are limited. Therefore, the ground base station is preferred to be accessed once the good signal of the ground base station is detected.

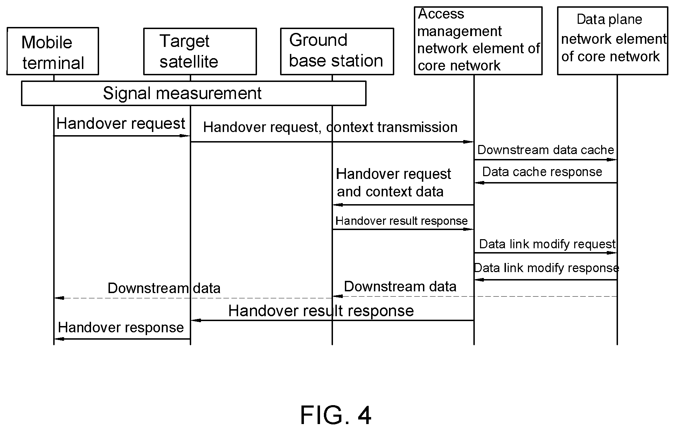

FIG. 4 shows a flowchart for data processing when the mobile terminal hands over the connection from the target satellite to the ground base station, and the process follows.

The core network obtains a second handover request sent by the mobile terminal by means of the target satellite, and the second handover request includes second context data generated between the mobile terminal and the target satellite.

In response to the second handover request, the core network searches out the ground base station.

The core network caches the second context data.

The core network requests the ground base station to switch the mobile terminal to be connected to the ground base station.

When a handover result returned from the ground base station is successful, the core network modifies a data link of the mobile terminal to be connected with the ground base station, and sends the second context data to the mobile terminal by means of the ground base station.

Referring to FIG. 4, the process of handover from the target satellite to the ground base station is opposite to that of handover from the ground base station to the target satellite as shown in FIG. 2. Besides, it's unnecessary for the access management network element of the core network to select a target satellite among multiple communication satellites, instead, the access management network element of the core network may directly select the base station with the strongest signal as the ground base station to be connected.

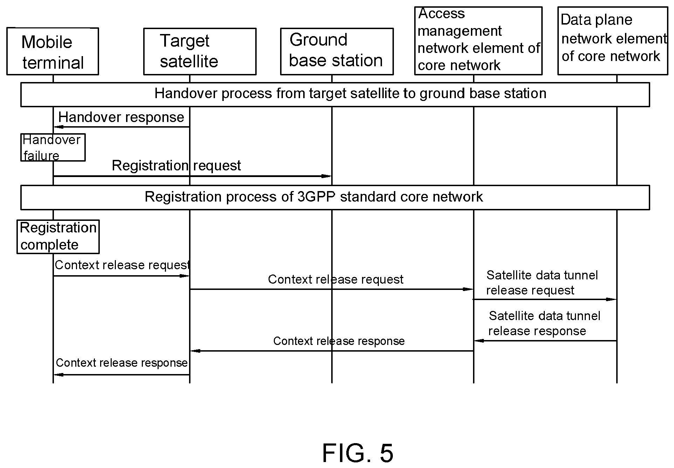

In the handover process, the mobile terminal preferentially selects the ground base station. Therefore, a compulsory handover process for the mobile terminal to connect to the ground base station will be started once the mobile terminal fails to switch from the target satellite to the ground base station. Referring to FIG. 5, the core network obtains a registration request message sent by the mobile terminal through the ground base station, executes the terminal registration process in TS 3GPP 23502 protocol, accepts the registration of the mobile terminal, and establishes a data transmission channel of data plane in the data plane network element of the core network. After the mobile terminal has registered with the core network, the satellite and the core network access management network element are requested to release the context data and the terminal resources, and the data transmission channels of the satellite and the data plane network element of the core network are also released. In such a way, all resources for the mobile terminal allocated by the previous satellite end are released, so that the whole compulsory handover process is completed.

By executing the compulsory handover process to switch the connection to the ground base station as shown in FIG. 5, the mobile terminal may always preferentially connect to the ground base station for communication under a case of good signal of the ground base station, which reduces the pressure of the communication satellite and ensures an improved communication experience.

It should be noted that, unless otherwise specified, when one feature is described to be "fixed" or "connected" to another feature, these features may be directly or indirectly fixed or connected. In addition, the position descriptions of "up", "down", "left" and "right" used in this disclosure are only used in terms of the positions of the components in the attached drawings. Singular forms of "a", "an", "one", "said" and "the" in the disclosure are also intended to include their plural forms, unless the context clearly indicates otherwise. In addition, unless otherwise specified, all technical and scientific terms used in these embodiments have the same meaning as would normally be understood by a person skilled in the technical field. The terms used in these embodiments statement are intended only to describe specific embodiments and are not intended to restrict this application. The term "and/or" as used in this embodiment may include any combination of one or more related listed items.

It should be understood that although the terms first, second, third, etc. may be used to describe various components in this disclosure, these components should not be limited to these terms. These terms are used only to distinguish components of the same type from each other. For example, the first component may also be referred to as the second component, and similarly the second binary component may be referred to as the first component, without leaving the scope of this disclosure. The use for any or all examples or exemplary language ("for example", "such as", etc.) provided by this disclosure is intended only to better illustrate the embodiments of this application and does not limit the scope of this application, unless otherwise required.

It should be recognized that embodiments of this application may be realized or implemented by computer hardware, a combination of hardware and software, or computer instructions stored in a non-temporary computer readable memory. The method may be implemented in a computer program using standard programming techniques including a non-temporary computer readable storage medium configured with a computer program, and the storage medium is configured to enable the computer to operate in a specific and predefined manner according to the method described in the specific embodiment and the accompanying drawings. Each program may be implemented in a high-level procedural or object-oriented programming language to communicate with computer systems. However, the program may be implemented in assembly or machine language if desired. In any case, the language may be a compiled or interpreted language. In addition, the program may be run on a programmed ASIC for this purpose.

Furthermore, the operations of the processes described in this embodiment may be performed in any appropriate order, unless otherwise directed by this embodiment or otherwise clearly contradicted by the context. The procedures described in this embodiment (or variations and/or combinations thereof) may be executed under the control of one or more computer systems configured with executable instructions and may be implemented as code (e.g., executable instructions, one or more computer programs, or one or more applications) jointly executed on one or more processors, by hardware or a combination thereof. The computer program may include multiple instructions that may be executed by one or more processors.

Further, the method may be operationally connected to any type of suitable computing platform, including but not limited to personal computers, minicomputers, mainframes, workstations, networks or distributed computing environments, separate or integrated computer platforms, or communications with charged particle tools or other imaging devices. All aspects of this application may be implemented in machine-readable code stored on non-temporary storage media or devices, whether removable or integrated into a computing platform, such as a hard disk, an optical read and/or write storage medium, a RAM, a ROM, etc., may be readable by a programmable computer. The storage media or device, when read by the computer, may be configured to operate the computer to perform the process described here. In addition, all or parts of machine-readable codes may be transmitted over wired or wireless networks. Where such media include instructions or programs that implement the steps described above in combination with a microprocessor or other data processors, the application described in the embodiments may include these and other different types of non-temporary computer readable storage media. This application also includes the computer itself when programmed in accordance with the methods and techniques described in this application.

A computer program may be applied to the input data to perform the function described in this embodiment, thereby transforming the input data to generate output data stored in a non-volatile memory. The output information may also be applied to one or more output devices such as displays. In the preferred embodiment of this application, the transformed data represents physical and tangible objects, including specific visual depictions of physical and tangible objects generated on the displays.

## Claims

1. A communication method based on handover of a terrestrial mobile network and a satellite mobile network, comprising:
obtaining, by a core network, a first handover request sent by a mobile terminal via a ground base station connected with the mobile terminal, wherein the first handover request comprises a first context data generated between the mobile terminal and the ground base station;
in response to the first handover request, searching out and selecting, by the core network, a target satellite among satellite identifiers included in the first handover request which is a communication satellite capable of maintaining a longest effective communication time with the mobile terminal;
caching, by the core network, the first context data;
requesting, by the core network, the target satellite to switch a connection of the mobile terminal from the ground base station to the target satellite; and
when a handover result returned from the target satellite is successful, modifying, by the core network, a data link of the mobile terminal to be connected with the target satellite, and sending the first context data to the mobile terminal via the target satellite.

2. The communication method based on handover of a terrestrial mobile network and a satellite mobile network according to claim 1, further comprising:
when the handover result returned from the target satellite is successful, returning, by the core network, the handover result to the ground base station and instructing the ground base station to release the first context data.

3. The communication method based on handover of a terrestrial mobile network and a satellite mobile network according to claim 1 or claim 2, further comprising:
when the handover result returned from the target satellite is failed, returning, by the core network, the handover result to the ground base station, keeping the data link of the mobile terminal to be connected with the ground base station, cancelling a cache of the first context data, and sending the first context data to the mobile terminal via the ground base station.

4. The communication method based on handover of a terrestrial mobile network and a satellite mobile network according to claim 1, wherein the first handover request further comprises a satellite identifier of at least one communication satellite detected by the mobile terminal.

5. The communication method based on handover of a terrestrial mobile network and a satellite mobile network according to claim 4, wherein said in response to the first handover request, searching out, by the core network, a target satellite, comprises:
reading, by the core network, a running trajectory and a running speed of a corresponding communication satellite locally according to the satellite identifier;
determining an effective communication trajectory of the corresponding communication satellite according to the running trajectory and location information of the mobile terminal;
determining an effective communication time of the corresponding communication satellite according to the effective communication trajectory and the running speed; and
determining a communication satellite with a longest effective communication time as the target satellite.

6. The communication method based on handover of a terrestrial mobile network and a satellite mobile network according to claim 1, further comprising:
obtaining, by the core network, a second handover request sent by the mobile terminal via the target satellite, wherein the second handover request comprises second context data generated between the mobile terminal and the target satellite;
in response to the second handover request, searching out, by the core network, the ground base station;
caching, by the core network, the second context data;
requesting, by the core network, the ground base station to switch the mobile terminal to be connected to the ground base station; and
when a handover result returned from the ground base station is successful, modifying, by the core network, the data link of the mobile terminal to be connected with the ground base station, and sending the second context data to the mobile terminal via the ground base station.

7. The communication method based on handover of a terrestrial mobile network and a satellite mobile network according to claim 6, further comprising:
when the handover result returned from the ground base station is failed, compulsorily switching, by the core network, the connection of the mobile terminal to the ground base station.

8. The communication method based on handover of a terrestrial mobile network and a satellite mobile network according to claim 7, wherein said compulsorily switching, by the core network, the mobile terminal to connect to the ground base station, comprises:
obtaining, by the core network, a registration request message sent by the mobile terminal through the ground base station; and
in response to the registration request message, executing, by the core network, a terminal registration process in TS 3GPP 23502 protocol, accepting a registration of the mobile terminal, and releasing the second context data.

9. A core network, comprising an access management network element and a data plane network element, wherein the core network is configured to execute the communication method based on handover of a terrestrial mobile network and a satellite mobile network according to any of claims 1-8.

10. The core network according to claim 9, wherein the access management network element comprises an MME network element or an AMF network element, and the data plane network element comprises an SGW network element, a PGW network element or a UPF network element.

## Patentansprüche

1. Kommunikationsverfahren basierend auf einer Übergabe eines terrestrischen Mobilfunknetzes und eines Satellitenmobilfunknetzes, umfassend:
Erhalten, durch ein Kernnetz, einer ersten Übergabeanforderung, die durch ein mobiles Endgerät über eine Bodenbasisstation gesendet wird, die mit dem mobilen Endgerät verbunden ist, wobei die erste Übergabeanforderung erste Kontextdaten umfasst, die zwischen dem mobilen Endgerät und der Bodenbasisstation erzeugt werden;
als Reaktion auf die erste Übergabeanforderung, Heraussuchen und Auswählen, durch das Kernnetz, eines Zielsatelliten unter Satellitenkennungen, die in der ersten Übergabeanforderung enthalten sind, wobei der Zielsatellit ein Kommunikationssatellit ist, der dazu in der Lage ist, eine längste effektive Kommunikationszeit mit dem mobilen Endgerät aufrechtzuerhalten;
Zwischenspeichern, durch das Kernnetz, der ersten Kontextdaten;
Anfordern, durch das Kernnetz, dass der Zielsatellit eine Verbindung des mobilen Endgeräts von der Bodenbasisstation zu dem Zielsatelliten umschaltet; und
wenn ein von dem Zielsatelliten zurückgegebenes Übergabeergebnis erfolgreich ist, Modifizieren, durch das Kernnetz, einer Datenverbindung des mobilen Endgeräts, um mit dem Zielsatelliten verbunden zu sein, und Senden der ersten Kontextdaten an das mobile Endgerät über den Zielsatelliten.

2. Kommunikationsverfahren basierend auf einer Übergabe eines terrestrischen Mobilfunknetzes und eines Satellitenmobilfunknetzes nach Anspruch 1, ferner umfassend:
wenn das von dem Zielsatelliten zurückgegebene Übergabeergebnis erfolgreich ist, Zurückgeben, durch das Kernnetz, des Übergabeergebnisses an die Bodenbasisstation und Anweisen der Bodenbasisstation, die ersten Kontextdaten freizugeben.

3. Kommunikationsverfahren basierend auf einer Übergabe eines terrestrischen Mobilfunknetzes und eines Satellitenmobilfunknetzes nach Anspruch 1 oder Anspruch 2, ferner umfassend:
wenn das von dem Zielsatelliten zurückgegebene Übergabeergebnis fehlgeschlagen ist, Zurückgeben, durch das Kernnetz, des Übergabeergebnisses an die Bodenbasisstation, Halten der Datenverbindung des mobilen Endgeräts, um mit der Bodenbasisstation verbunden zu sein, Löschen eines Zwischenspeichers der ersten Kontextdaten und Senden der ersten Kontextdaten an das mobile Endgerät über die Bodenbasisstation.

4. Kommunikationsverfahren basierend auf einer Übergabe eines terrestrischen Mobilfunknetzes und eines Satellitenmobilfunknetzes nach Anspruch 1, wobei die erste Übergabeanforderung ferner eine Satellitenkennung von mindestens einem Kommunikationssatelliten umfasst, der durch das mobile Endgerät erfasst wird.

5. Kommunikationsverfahren basierend auf einer Übergabe eines terrestrischen Mobilfunknetzes und eines Satellitenmobilfunknetzes nach Anspruch 4, wobei das als Reaktion auf die erste Übergabeanforderung erfolgende Heraussuchen, durch das Kernnetz, eines Zielsatelliten umfasst:
Lesen, durch das Kernnetz, einer Bewegungsbahn und einer Bewegungsgeschwindigkeit eines entsprechenden Kommunikationssatelliten lokal gemäß der Satellitenkennung;
Bestimmen einer effektiven Kommunikationsbahn des entsprechenden Kommunikationssatelliten gemäß der Bewegungsbahn und Standortinformationen des mobilen Endgeräts;
Bestimmen einer effektiven Kommunikationszeit des entsprechenden Kommunikationssatelliten gemäß der effektiven Kommunikationsbahn und der Bewegungsgeschwindigkeit; und
Bestimmen eines Kommunikationssatelliten mit einer längsten effektiven Kommunikationszeit als den Zielsatelliten.

6. Kommunikationsverfahren basierend auf einer Übergabe eines terrestrischen Mobilfunknetzes und eines Satellitenmobilfunknetzes nach Anspruch 1, ferner umfassend:
Erhalten, durch das Kernnetz, einer zweiten Übergabeanforderung, die durch das mobile Endgerät über den Zielsatelliten gesendet wird, wobei die zweite Übergabeanforderung zweite Kontextdaten umfasst, die zwischen dem mobilen Endgerät und dem Zielsatelliten erzeugt werden;
als Reaktion auf die zweite Übergabeanforderung, Heraussuchen, durch das Kernnetz, der Bodenbasisstation;
Zwischenspeichern, durch das Kernnetz, der zweiten Kontextdaten;
Anfordern, durch das Kernnetz, dass die Bodenbasisstation das mobile Endgerät umschaltet, um mit der Bodenbasisstation verbunden zu werden; und
wenn ein von der Bodenbasisstation zurückgegebenes Übergabeergebnis erfolgreich ist, Modifizieren, durch das Kernnetz, der Datenverbindung des mobilen Endgeräts, um mit der Bodenbasisstation verbunden zu sein, und Senden der zweiten Kontextdaten an das mobile Endgerät über die Bodenbasisstation.

7. Kommunikationsverfahren basierend auf einer Übergabe eines terrestrischen Mobilfunknetzes und eines Satellitenmobilfunknetzes nach Anspruch 6, ferner umfassend:
wenn das von der Bodenbasisstation zurückgegebene Übergabeergebnis fehlgeschlagen ist, zwangsweises Umschalten, durch das Kernnetz, der Verbindung des mobilen Endgeräts zu der Bodenbasisstation.

8. Kommunikationsverfahren basierend auf einer Übergabe eines terrestrischen Mobilfunknetzes und eines Satellitenmobilfunknetzes nach Anspruch 7, wobei das zwangsweise Umschalten, durch das Kernnetz, des mobilen Endgeräts, um eine Verbindung zu der Bodenbasisstation herzustellen, umfasst:
Erhalten, durch das Kernnetz, einer Registrierungsanforderungsnachricht, die durch das mobile Endgerät über die Bodenbasisstation gesendet wird; und
als Reaktion auf die Registrierungsanforderungsnachricht, Ausführen, durch das Kernnetz, eines Endgeräte-Registrierungsprozesses in dem TS 3GPP 23502-Protokoll, Akzeptieren einer Registrierung des mobilen Endgeräts und Freigeben der zweiten Kontextdaten.

9. Kernnetz, umfassend ein Zugriffsverwaltungs-Netzwerkelement und ein Datenebenen-Netzwerkelement, wobei das Kernnetz konfiguriert ist, das Kommunikationsverfahren basierend auf einer Übergabe eines terrestrischen Mobilfunknetzes und eines Satellitenmobilfunknetzes nach einem der Ansprüche 1-8 auszuführen.

10. Kernnetz nach Anspruch 9, wobei das Zugriffsverwaltungs-Netzwerkelement ein MME-Netzwerkelement oder ein AMF-Netzwerkelement umfasst und das Datenebenen-Netzwerkelement ein SGW-Netzwerkelement, ein PGW-Netzwerkelement oder ein UPF-Netzwerkelement umfasst.

## Revendications

1. Procédé de communication basé sur un transfert d'un réseau mobile terrestre et d'un réseau mobile par satellite, comprenant :
l'obtention, par un réseau central, d'une première demande de transfert envoyée par un terminal mobile via une station de base au sol connectée au terminal mobile, dans lequel la première demande de transfert comprend des premières données de contexte générées entre le terminal mobile et la station de base au sol ;
en réponse à la première demande de transfert, la recherche et la sélection, par le réseau central, d'un satellite cible parmi des identifiants de satellite inclus dans la première demande de transfert, lequel est un satellite de communication capable de maintenir un temps de communication effectif le plus long avec le terminal mobile ;
la mise en cache, par le réseau central, des premières données de contexte ;
la demande, par le réseau central, au satellite cible de commuter une connexion du terminal mobile de la station de base au sol vers le satellite cible ; et
lorsqu'un résultat de transfert renvoyé par le satellite cible est réussi, la modification, par le réseau central, d'une liaison de données du terminal mobile pour être connectée au satellite cible, et l'envoi des premières données de contexte au terminal mobile via le satellite cible.

2. Procédé de communication basé sur un transfert d'un réseau mobile terrestre et d'un réseau mobile par satellite selon la revendication 1, comprenant en outre :
lorsque le résultat de transfert renvoyé par le satellite cible est réussi, le renvoi, par le réseau central, du résultat de transfert à la station de base au sol et l'instruction à la station de base au sol de libérer les premières données de contexte.

3. Procédé de communication basé sur un transfert d'un réseau mobile terrestre et d'un réseau mobile par satellite selon la revendication 1 ou la revendication 2, comprenant en outre :
lorsque le résultat de transfert renvoyé par le satellite cible a échoué, le renvoi, par le réseau central, du résultat de transfert à la station de base au sol, le maintien de la liaison de données du terminal mobile pour être connectée à la station de base au sol, l'annulation d'une mise en cache des premières données de contexte, et l'envoi des premières données de contexte au terminal mobile via la station de base au sol.

4. Procédé de communication basé sur un transfert d'un réseau mobile terrestre et d'un réseau mobile par satellite selon la revendication 1, dans lequel la première demande de transfert comprend en outre un identifiant de satellite d'au moins un satellite de communication détecté par le terminal mobile.

5. Procédé de communication basé sur un transfert d'un réseau mobile terrestre et d'un réseau mobile par satellite selon la revendication 4, dans lequel ladite recherche, par le réseau central, d'un satellite cible en réponse à la première demande de transfert comprend :
la lecture, par le réseau central, d'une trajectoire de fonctionnement et d'une vitesse de fonctionnement d'un satellite de communication correspondant localement selon l'identifiant de satellite ;
la détermination d'une trajectoire de communication effective du satellite de communication correspondant selon la trajectoire de fonctionnement et des informations de localisation du terminal mobile ;
la détermination d'un temps de communication effectif du satellite de communication correspondant selon la trajectoire de communication effective et la vitesse de fonctionnement ; et
la détermination d'un satellite de communication ayant un temps de communication effectif le plus long comme satellite cible.

6. Procédé de communication basé sur un transfert d'un réseau mobile terrestre et d'un réseau mobile par satellite selon la revendication 1, comprenant en outre :
l'obtention, par le réseau central, d'une seconde demande de transfert envoyée par le terminal mobile via le satellite cible, dans lequel la seconde demande de transfert comprend des secondes données de contexte générées entre le terminal mobile et le satellite cible ;
en réponse à la seconde demande de transfert, la recherche, par le réseau central, de la station de base au sol ;
la mise en cache, par le réseau central, des secondes données de contexte ;
la demande, par le réseau central, à la station de base au sol de commuter le terminal mobile pour qu'il soit connecté à la station de base au sol ; et
lorsqu'un résultat de transfert renvoyé par la station de base au sol est réussi, la modification, par le réseau central, de la liaison de données du terminal mobile pour être connectée à la station de base au sol, et l'envoi des secondes données de contexte au terminal mobile via la station de base au sol.

7. Procédé de communication basé sur un transfert d'un réseau mobile terrestre et d'un réseau mobile par satellite selon la revendication 6, comprenant en outre :
lorsque le résultat de transfert renvoyé par la station de base au sol a échoué, la commutation forcée, par le réseau central, de la connexion du terminal mobile vers la station de base au sol.

8. Procédé de communication basé sur un transfert d'un réseau mobile terrestre et d'un réseau mobile par satellite selon la revendication 7, dans lequel ladite commutation forcée, par le réseau central, du terminal mobile pour se connecter à la station de base au sol comprend :
l'obtention, par le réseau central, d'un message de demande d'enregistrement envoyé par le terminal mobile par l'intermédiaire de la station de base au sol ; et
en réponse au message de demande d'enregistrement, l'exécution, par le réseau central, d'un processus d'enregistrement de terminal dans le protocole TS 3GPP 23502, l'acceptation d'un enregistrement du terminal mobile, et la libération des secondes données de contexte.

9. Réseau central, comprenant un élément de réseau de gestion d'accès et un élément de réseau de plan de données, dans lequel le réseau central est configuré pour exécuter le procédé de communication basé sur un transfert d'un réseau mobile terrestre et d'un réseau mobile par satellite selon l'une quelconque des revendications 1 à 8.

10. Réseau central selon la revendication 9, dans lequel l'élément de réseau de gestion d'accès comprend un élément de réseau MME ou un élément de réseau AMF, et l'élément de réseau de plan de données comprend un élément de réseau SGW, un élément de réseau PGW ou un élément de réseau UPF.
